# EUROPÄISCHE PATENTSCHRIFT

(11) **EP 1 692 640 B1**
(45) Veröffentlichungstag und Bekanntmachung des Hinweises auf die Patenterteilung: **27.02.2013**
(21) Anmeldenummer: 04803696.6
(22) Anmeldetag: 09.12.2004
(51) Int. Cl.: G06K 15/00, G06F 17/21

(54) **VERFAHREN UND SYSTEM ZUM VERARBEITEN VON DRUCKDATEN MINDESTENS EINER DRUCKSEITE**
METHOD AND SYSTEM FOR PROCESSING PRINT DATA OF AT LEAST ONE PRINT PAGE
PROCEDE ET SYSTEME POUR TRAITER DES DONNEES D'IMPRESSION CONCERNANT AU MOINS UNE PAGE A IMPRIMER

(30) Priorität: 09.12.2003 DE 10357490
(43) Veröffentlichungstag der Anmeldung: 23.08.2006
(73) Patentinhaber: OCÉ Printing Systems GmbH, 85586 Poing (DE)
(72) Erfinder: SIEMENS, Rüdiger, 81825 München (DE); BOLSCH, Andreas, 35390 Giessen (DE); HUNDSNURSCHER, Herbert, 85457 Wörth (DE); KURMANN, Olga, 81379 München (DE); WEINER, Helmut, 81371 München (DE)
(74) Vertreter: Schaumburg, Thoenes, Thurn, Landskron, Eckert
(86) Internationale Anmeldenummer: PCT/EP2004/014042
(87) Internationale Veröffentlichungsnummer: WO 2005/059814

(56) Entgegenhaltungen:
- EP-A- 1 133 159
- WO-A-01/77805
- WO-A-03/025713
- JP-A- 10 105 348
- JP-A- 11 196 285
- US-A1- 2002 057 443
- PATENT ABSTRACTS OF JAPAN Bd. 2003, Nr. 11, 5. November 2003 (2003-11-05) & JP 2003 196648 A (CANON INC), 11. Juli 2003 (2003-07-11)

## Beschreibung

Die Erfindung betrifft ein Verfahren und ein System zum Verarbeiten von Druckdaten mehrerer Druckseiten. Ein Druckdatenstrom mit Druckdaten einer Druckseite wird erzeugt, wobei mindestens einem Bereich dieser Druckseite erste Objekteigenschaften zugeordnet sind. Diese Objekteigenschaften betreffen insbesondere Bildeigenschaften und/oder Bildverarbeitungsparameter, die diesem Bereich zugeordnet sind.

Druckdaten werden einem Druckzentrum in Form eines Druckdatenstroms zum Erzeugen von Druckgut zugeführt. Die Druckdaten sind oft derart aufbereitet, dass die Druckbilder im Wesentlichen nicht mehr veränderbar sind. Bei verschiedenen Arten von Druckgütern ist es auch aus Sicherheits- und Datenschutzgründen zwingend erforderlich, dass die darzustellenden Objekte wie Text oder Geschäftsgraphiken an sich nicht mehr veränderbar sind. Dies ist insbesondere bei Kontoauszügen und Rechnungen zwingend erforderlich, um vor Allem Manipulationen und Fehler am Inhalt dieser Dokumente durch Vorgänge im Druckzentrum auszuschließen. Jedoch erfordert die Verarbeitung von Druckdaten eine differenzierte Verarbeitung der Druckdaten einzelner Objekte einer Druckseite, um geeignete Verarbeitungsparameter auszuwählen, mit deren Hilfe die jeweiligen Objekte dann optimal an die Ausgabeparameter des Druckers angepasst werden, um hochwertige Druckbilder durch geeignete Bildumwandlungsverfahren bzw. Bildverarbeitungsverfahren zu gewährleisten. In den Druckdatenströmen haben jedoch die einzelnen Objekte oft gleiche Objekteigenschaften, wodurch eine differenzierte Verarbeitung der einzelnen Objekte nicht möglich ist. Die übersandten Druckdaten sind somit hinsichtlich bestimmter Attribute gleich.

Aus der Patentanmeldung der Anmelderin WO-A-01/77805 sind Verfahren und Systeme zum Erstellen und Ausgeben mindestens einer Druckseite bekannt, bei denen einzelnen Objekten der Druckseite beim Erstellen der Druckseite Objekteigenschaften zugeordnet werden, mit deren Hilfe eine Auswahl von Verarbeitungsverfahren zum Erzeugen eines Druckbildes ausgewählt werden.

Aus der WO 03/025713 A ist ein Verfahren bekannt, bei dem ein gedrucktes Dokument mit Hilfe eines Scanners eingescannt und zu Bilddaten digitalisiert wird. Die digitalisierten Bilddaten werden dokumentenindividuell und seitenindividuell durch eine Bedienperson analysiert. Verschiedenen Bereichen des erfassten Dokuments, wie z.B. dort vorhandenen Bildern oder Text, werden dann von der Bedienperson Attribute, z.B. Text oder Bild, zugeordnet.

Aus dem Dokument EP-A-1 133 159 ist eine Vorrichtung zur Modifikation eines Dokuments bekannt, bei dem in einem Dokument rechteckige Bereiche automatisch extrahiert werden, denen Eigenschaftsparameter bereits zugeordnet sind. Eine Bedienperson kann die Art der Modifikation der ausgewählten rechteckigen Bereiche festlegen und zuordnen. Diese einem rechteckigen Bereich zugeordnete Art der Modifikation wird dem Bereich zugeordnet gespeichert. Die Daten des Bereichs werden abhängig von der zugeordneten Art der Modifikation verarbeitet und als modifiziertes Bild ausgegeben.

Aus dem Dokument JP 10 105348 A ist eine Druckersteuerung sowie ein Verfahren zum Steuern eines Druckers bekannt, bei dem den zu druckenden Objekten seitenweise Attribute zugeordnet sind. Diese Attribute betreffen die Auflösung der zu druckenden Seite. Abhängig von einer Seite zugeordneten Auflösung wird die Verarbeitungsauflösung beim Verarbeiten der entsprechenden Seite geändert.

Aus dem Dokument JP 11 196285 A ist bekannt, die Bedingungen zum Verarbeiten auf einfache Art und Weise festzulegen, indem Bilder mit unterschiedlichen Farbverarbeitungsbedingungen nebeneinander ausgegeben werden, um dem Benutzer eine einfache Auswahlmöglichkeit der Farbverarbeitungsbedingungen zu ermöglichen.

Aus dem Dokument US 2002/057443 A1 ist bekannt, eine Attributinformation Druckdaten, die von einem Druckertreiber zu einem Drucker übertragen werden, auf der Grundlage von Farbinformationen der Farben C, M, Y, K zuzufügen. Der Druckertreiber legt abhängig von der Farbinformation einen entsprechenden Wert fest und sendet die Druckdaten zu dem Drucker. Der Drucker druckt den Druckdaten entsprechende Druckbilder abhängig von dem übermittelten Attribut.

Aufgabe der Erfindung ist es, ein Verfahren und ein System zum Verarbeiten von Druckdaten mehrerer Druckseiten anzugeben, durch die auf einfache Art und Weise Druckdaten bereitgestellt werden, mit denen hochwertige Druckbilder erzeugbar sind.

Die Aufgabe wird durch ein Verfahren mit den Merkmalen des Patentanspruchs 1 gelöst. Vorteilhafte Weiterbildungen der Erfindung sind in den abhängigen Patentansprüchen angegeben.

Durch ein erfindungsgemäßes Verfahren zum Verarbeiten von Druckdaten mehrerer Druckseiten ist es möglich, innerhalb einer Seite für den Teil des Bereichs und den übrigen Bereich unterschiedliche vorbestimmte Bildverarbeitungsprozesse auf jeder Seite des Dokuments auszuführen. Beispielsweise kann es vorgesehen sein, innerhalb bestimmter Bereiche einer Seite eine vorbestimmte Rasterung und/oder eine vorbestimmte Farbumsetzung mit Hilfe der Objekteigenschaften auszuwählen. Dadurch wird eine optimale Verarbeitung der Dokumentendaten, d.h. der im Druckdatenstrom enthaltenen Druckdaten zum Erzeugen mehrerer Druckseiten, auch dann durchgeführt, wenn den einzelnen im Druckdatenstrom enthaltenen Objekten keine individualisierenden Objekteigenschaften zugewiesen sind, mit denen eine automatische Auswahl von Bildverarbeitungsprozessen möglich ist. Somit ist eine optimale Bildverarbeitung der übertragenen Druckdaten auch dann möglich, wenn die objektweisen Zuordnungen von Objekteigenschaften bei der Übertragung vom Ersteller bis zur Auslieferung an das Druckzentrum verloren gegangen sind bzw. absichtlich entfernt worden sind. Für eine optimierte Weiterverarbeitung der betreffenden Objekte ist jedoch eine Unterscheidbarkeit erforderlich, die durch das Verfahren nach Anspruch 1 ermöglicht wird.

Ein zweiter Aspekt der Erfindung betrifft ein System zum Verarbeiten von Druckdaten mehrerer Druckseiten. Mit Hilfe einer ersten Datenverarbeitungseinheit wird ein Druckdatenstrom mit Druckdaten mehrerer Druckseiten erzeugt, wobei zumindest einem Bereich dieser Druckseiten erste Objekteigenschaften zugeordnet sind. Eine zweite Datenverarbeitungseinheit verarbeitet die Druckdaten, wobei mindestens ein Teil des Bereichs einer Druckseite des Druckdatenstroms auswählbar ist. Diesem ausgewählten Teil des Bereichs auf jeder Druckseite des Druckdatenstroms ist mindestens einer von der ersten Objekteigenschaft verschiedenen zweiten Objekteigenschaft zuordenbar. Die zweite Datenverarbeitungseinheit oder ein Drucker verarbeitet die Druckdaten jeder Druckseite, die den ausgewählten Teil des Bereichs betreffen, abhängig von der zweiten Objekteigenschaft weiter.

Durch das erfindungsgemäße System gemäß dem zweiten Aspekt der Erfindung ist es möglich, auch Druckdaten von unterschiedlichen Objekten individuell weiter zu verarbeiten, wenn die Druckdaten der Objekte selbst keine individualisierenden Objekteigenschaften enthalten. Die Weiterverarbeitung der Druckdaten kann durch das erfindungsgemäße System mit für diese Druckdaten geeigneten Bildverarbeitungsverfahren durchgeführt werden, wodurch die Druckdaten insbesondere zum Erzeugen von Druckbildern derart weiterverarbeitet werden können, dass optimale Druckbilder erzeugt werden.

Durch das System ist es auch möglich, dass dem Drucker Druckdaten zugeführt werden, bei denen darin enthaltenen Objekten individualisierende Objekteigenschaften zuordenbar sind. Die Verarbeitung der Daten dieser Objekte ist dann individuell mit Hilfe geeigneter Bildverarbeitungsverfahren durch den Drucker verarbeitbar, wobei mindestens eines der Bildverarbeitungsverfahren mit Hilfe der zugeordneten zweiten Objekteigenschaft ausgewählt und/oder parametriert wird. Die Objekteigenschaft wird einem Objekt erfindungsgemäß dadurch zugewiesen, dass ein flächiger Teil eines Bereichs eines Druckbilds oder ein Teil eines Druckbilds ausgewählt wird, dem zumindest eine individualisierende Objekteigenschaft zugewiesen wird. Dadurch kann dieser flächige Teil bzw. Teilbereich anders als der übrige Bereich der Druckseite mit ursprünglich gleichen Objekteigenschaften bzw. als die übrige Druckseite mit ursprünglich gleichen Objekteigenschaften weiter verarbeitet werden. Jedes Objekt kann dabei mit Hilfe mehrerer verschiedener Bildverarbeitungsverfahren verarbeitet werden, um eine zum Erzeugen eines qualitativ hochwertigen Druckbildes geeignete Verarbeitung der Druckdaten zu erreichen.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder dem Verfahren sowie derartige weitere Anwendungen der Erfindung als übliches derzeitiges oder künftiges Fachwissen eines zuständigen Fachmanns angesehen werden. Die Figuren zeigen Ausführungsbeispiele der Erfindung, nämlich:
- Figur 1: ein System gemäß einer ersten Ausführungsform der Erfindung zum Erstellen und Ausgeben einer Druckseite,
- Figur 2: ein Blockschaltbild mit Elementen zum Erstellen einer Druckseite,
- Figur 3: die Ansicht einer Druckseite, die mit Hilfe des Systems nach Figur 1 erzeugt worden ist,
- Figur 4: ein Blockschaltbild eines Arbeitsablaufs zum Erzeugen und Ausgeben einer Druckseite nach Figur 3 gemäß einer Ausführungsform der Erfindung,
- Figur 5: die Gegenüberstellung eines in einem Druckdatenstrom enthaltenen Originalbildes mit Hilfe eines Muster-Dithering-Verfahrens in ein Schwarzweißbild,
- Figur 6: eine Umwandlung des Originalbildes nach Figur 5 in ein Schwarzweißbild mit Hilfe eines Diffusions-Dithering-Verfahrens,
- Figur 7: eine Umwandlung des Originalbildes nach den Figuren 5 und 6 in ein Schwarzweißbild mit Hilfe eines Halftone-Screen-Verfahrens,
- Figur 8: die Umwandlung des Originalbildes nach den Figuren 5 bis 7 in ein Schwarzweißbild mit Hilfe eines Regular-Raster-Verfahrens,
- Figur 9: die Umwandlung des Originalbildes in ein Schwarzweißbild mit Hilfe eines Fehlerdiffusions-Verfahrens nach Floyd-Steinberg,
- Figur 10: die Umwandlung des Originalbildes in ein Schwarzweißbild mit Hilfe eines Fehlerdiffusions-Verfahrens nach Bukes,
- Figur 11: die Umwandlung des Originalbildes in ein Schwarzweißbild mit Hilfe eines Fehlerdiffusions-Verfahrens nach Stucki, und
- Figur 12: einen Ablaufplan zum Durchführen eines Verfahrens zum Verarbeiten von Druckdaten mindestens einer Druckseite gemäß der Erfindung.

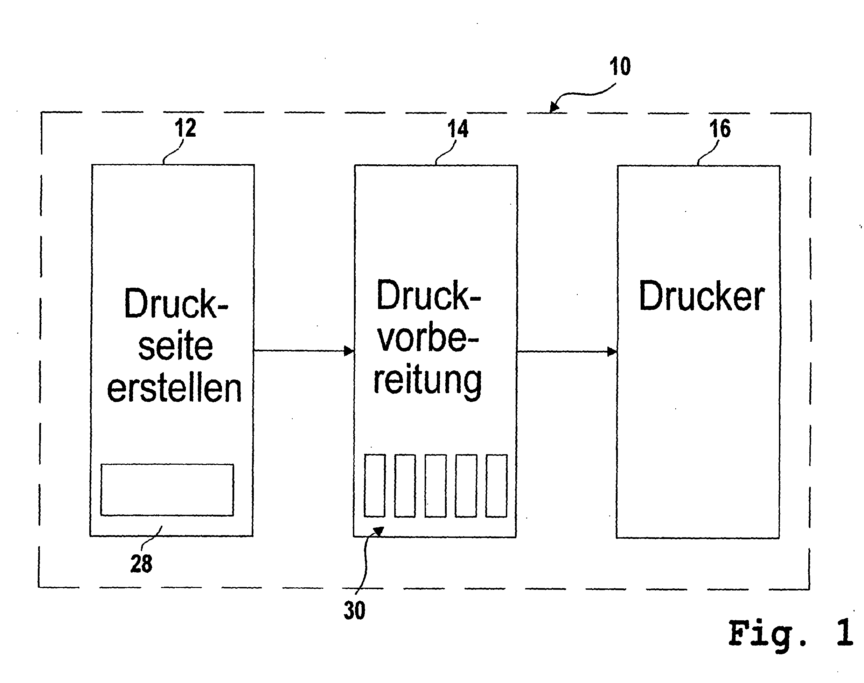

In Figur 1 ist mit Hilfe eines Blockschaltbildes eines Systems 10 der Ablauf zum Erstellen und Ausgeben einer Druckseite in einem üblichen Produktionsablauf beim Erzeugen von Dokumenten dargestellt. Mit Hilfe einer ersten Datenverarbeitungsanlage 12 wird mit Hilfe eines geeigneten Programms 28 eine Druckseite erstellt. Ein solches Programm kann z.B. "Quark Express", "Microsoft Word" oder das Programm "Photoshop" der Firma Adobe sein. Um Manipulationen der erzeugten Druckdaten zu vermeiden, wird die Druckseite in Form eines nicht mehr manipulierbaren Druckdatenstroms 28 ausgegeben. Ein solcher Druckdatenstrom kann z.B. mit Hilfe eines portable document formate (pdf) der Firma Adobe erzeugt sein. Dieser Druckdatenstrom wird zu einer zweiten Datenverarbeitungseinheit 14 übertragen. Mit Hilfe der zweiten Datenverarbeitungseinheit 14 erfolgt eine Druckvorbereitung, bei der die im Druckdatenstrom enthaltenen Druckdaten an die Ausgabeparameter eines Druckers 16 angepasst werden, dem die Druckdaten zum Erzeugen eines Druckbildes auf einem Trägermaterial zugeführt werden. Mit Hilfe des Systems 10 werden somit Druckdaten mindestens einer Druckseite erzeugt, verarbeitet und dem Drucker 16 zum Erzeugen eines Druckbildes zugeführt.

Das mit Hilfe der Datenverarbeitungsanlage 12 abgearbeitete Programm 28 zum Erzeugen der Druckseite wird auch als Formulareditorprogrammmodul bezeichnet. Die Druckdaten der Druckseite werden dabei unabhängig vom Ausgabegerät 16 erzeugt, auf dem diese Druckseite zu einem späteren Zeitpunkt ausgegeben wird. Die zweite Datenverarbeitungseinheit 14 wird auch als Druckvorbereitungscomputer bezeichnet und enthält mehrere Programmmodule zum Abarbeiten von Bildverarbeitungsprozeduren 30, die zusammen mit weiteren Programmmodulen (nicht dargestellt) vom Druckvorbereitungscomputer abgearbeitet werden. Mit Hilfe einer Eingabeeinheit (nicht dargestellt) des Druckvorbereitungscomputers 14 gibt eine Bedienperson die Anweisung, die Druckseite auf dem Drucker 16 auszugeben. Daraufhin werden die Druckdaten des Druckdatenstroms mit Hilfe der Bildverarbeitungsprozeduren 30 an die Ausgabeparameter des Druckers angepasst.

Jedoch enthalten die von der ersten Datenverarbeitungsanlage 12 zur zweiten Datenverarbeitungsanlage 14 übertragenen Druckdaten keine individualisierenden Objekteigenschaften einzelner Objekte der Druckseite, so dass die Bildverarbeitungsprozeduren 30 nicht auf das jeweilige Objekt angepasst ausgeführt werden können und/oder dass die Auswahl einer geeigneten Bildverarbeitungsprozedur 30 nicht mit Hilfe einer solchen Objekteigenschaft erfolgen kann. Erfindungsgemäß wird die Druckseite mit Hilfe der Datenverarbeitungsanlage 14 auf einer Anzeigeeinheit dargestellt und eine Bedienperson hat die Möglichkeit, einzelne Teilbereiche der Druckseite durch Eingabe von Koordinaten und/oder mit Hilfe eines Zeigegerätes zu markieren und einen solchen ausgewählten Teilbereich einer Objekteigenschaft zuzuweisen, mit der bei einer Weiterverarbeitung dieser Druckdaten eine geeignete Bildverarbeitungsprozedur 30 ausgewählt und/oder Parameter einer solchen Bildverarbeitungsprozedur 30 festgelegt werden. Dabei kann die Bedienperson auch mehrere Teilbereiche der Druckseite markieren, denen sie jeweils eine dem in diesem Teilbereich enthaltenen Objekt geeignete Objekteigenschaft zuweist. Somit wird Druckdaten, die zum Erzeugen des Druckbildes des ausgewählten Teils dienen, eine Objekteigenschaft zugewiesen. Alternativ oder zusätzlich werden Objekten, die eine individualisierende Objekteigenschaft im Druckdatenstrom haben, wie z.B. Grafikobjekte in einem Grafikformat, insbesondere dem BMP-, JPEG-, und TIFF-Format, abhängig von dieser Objekteigenschaft verarbeitet. Diese Objekte müssen dann nicht durch eine Auswahl eines Teilbereichs einer Seite ausgewählt und festgelegt werden.

Sind im Druckdatenstrom Druckdaten mehrerer Druckseiten enthalten, so kann die Bedienperson Teilbereiche auf jeder Druckseite individuell festlegen und diesen Teilbereichen Objekteigenschaften zuweisen und alternativ mindestens einen Teilbereich kennzeichnen, dem dann auf jeder Seite dieselbe Objekteigenschaft zugewiesen ist. Dies ist insbesondere dann sinnvoll, wenn das zu druckende Dokument auf jeder Seite an der gleichen Stelle ein vorbestimmtes Objekt, wie z.B. ein Firmenlogo, enthält.

Die Druckdaten sind in diesem Ausführungsbeispiel mit Hilfe der Datenverarbeitungseinheit 12 mit einer Auflösung von 800 dpi in Vollfarbe erzeugt worden. Der Drucker 16 kann jedoch nur Druckbilder mit einer Auflösung von 300 dpi in schwarzweiß ausgeben. Somit muss eine Anpassung der Druckdaten zur Ausgabe auf dem Drucker 16 erfolgen. Dazu müssen Objekte, die in einer anderen Farbe als der Wiedergabefarbe des Druckers in den Druckdaten enthalten sind, in die Druckfarbe des Druckers 16 umgewandelt werden.

Die Ausgabefarbe des Druckers 16 ist Schwarz, so dass farbige Elemente mit Hilfe einer Schwarzweiß-Darstellung ausgegeben werden. Die Umwandlung von Farb- und/oder Graustufen-Darstellungen in eine Schwarzweiß-Darstellung erfolgt mit Hilfe sogenannter Dithering-Bildverarbeitungsverfahren. Mit Hilfe dieser Dithering-Verfahren werden Grautöne und Mischfarben in ein Rasterbild mit zwei Grundfarben, vorzugsweise Schwarz, und der Farbe des Trägermaterials, d. h. z. B. Weiß, umgewandelt. Im Unterschied zum Rastern, d.h. zum reinen Anpassen der Auflösung, sind beim Dithering-Verfahren alle Bildpunkte gleich groß. Mit Hilfe des Dithering-Verfahrens werden bei Bilddarstellungen rein rechnerisch zusätzliche Graustufen bzw. Farben erzeugt, um z.B. kontinuierliche Farb - und/oder Helligkeitsübergänge zu erzeugen.

Dithering-Verfahren nutzen die Wahrnehmungsweise des menschlichen Auges aus, durch die bei sehr kleinen Abständen bestimmte nacheinander gestellte Farbpunkte nicht mehr als einzelne Farben, sondern als Mischfarben empfunden werden. Werden als Farben wie beim Drucker 16 nur Schwarz und Weiß verwendet, so entsteht für den Betrachter die Wahrnehmung einer Graufläche. Technisch kann das Dithering-Verfahren wie folgt ablaufen. Das zu verändernde Bild wird von der linken oberen Ecke bis zur linken unteren Ecke zeilenweise analysiert, wobei jeweils eine Fläche von 2 x 2 Pixeln als Rastergröße untersucht wird, wobei der mittlere Grauwert dieser Rastergröße ermittelt wird. Bei Farbbildern wird entsprechend ein mittlerer Farbton ermittelt. Je nachdem, ob dieser Wert über oder unter einer voreinstellbaren Vergleichsschwelle liegt, wird den Pixeln der Rastergröße entweder die Farbe Schwarz oder Weiß zugewiesen. Anschließend wird ein um ein Pixel verschobenes Rasterfeld analysiert und wie beschrieben ein einheitlicher Farbwert ermittelt. Diese Vorgehensweise wird fortgesetzt, bis die gesamte Fläche des Bildes bearbeitet ist.

Bei anderen Dithering-Verfahren wird die Rastergröße der Rastereinheiten vergrößert und innerhalb des Rasters eine Umverteilung der Pixel vorgenommen. In einem 4 x 4 Pixelraster können dann 17 verschiedene Graustufen dargestellt werden. Die Anzahl der möglichen Graustufen ist die Anzahl der in dieser Rastereinheit enthaltenen Bildpunkte plus eins. Zur Vermeidung von unerwünschten Mustern, wie Streifen und Wellen im geditherten Bild werden bei anderen Dithering-Verfahren Algorithmen verwendet, die einzufärbende Bildpunkte nach dem Zufallsprinzip verteilen. Mit Hilfe von Dithering-Verfahren können somit sowohl Reduzierungen der Farben und Graustufen eines Bildes als auch der Auflösung erzeugt werden.

Bei einigen auf der Druckseite enthaltenen Objekten, wie z.B. bei Vektorgrafiken, Textelementen und einigen Geschäftsgrafiken führt jedoch die Verwendung eines Dithering-Verfahrens, das z.B. zur Umwandlung von Portraitfotos geeignet ist, nicht zu qualitativ hochwertigen Druckbildern, da durch dieses Dithering-Verfahren zumindest einige der glatten Kanten der Bildelemente nur noch verschwommen dargestellt werden würden.

Jedoch ist bei einem Druckdatenstrom mit im Wesentlichen gleichen Objekteigenschaften der Objekte keine automatische Unterscheidung zur Auswahl eines geeigneten Verarbeitungsverfahrens bzw. Umwandlungsverfahrens möglich, wodurch beim Stand der Technik nur einheitliche Verarbeitungsparameter voreingestellt werden können.

Im Unterschied dazu ist es gemäß der Erfindung möglich, einzelne Teilbereiche einer Druckseite zu markieren und diesem markierten Bereich dann eine individuelle Objekteigenschaft zuzuweisen, mit der eine geeignete Nach- bzw. Weiterverarbeitung erfolgen kann. Alternativ werden Grafikobjekte, die in einem vorbestimmten Grafikformat im Druckdatenstrom enthalten sind, abhängig von diesem Grafikformat weiter verarbeitet, insbesondere mit Hilfe einer geeigneten Bildverarbeitungsprozedur weiter verarbeitet. Die Bildverarbeitungsprozedur zum Verarbeiten dieser Gesamtobjekte wird somit abhängig vom Grafikformat des Objekts ausgewählt. Für die weiteren Bereiche einer zu erzeugenden Druckseite oder eines zu erzeugenden Dokuments können weiterhin erfindungsgemäß Teilbereiche ausgewählt werden, um diesen Teilbereichen spezielle Objekteigenschaften zuzuweisen.

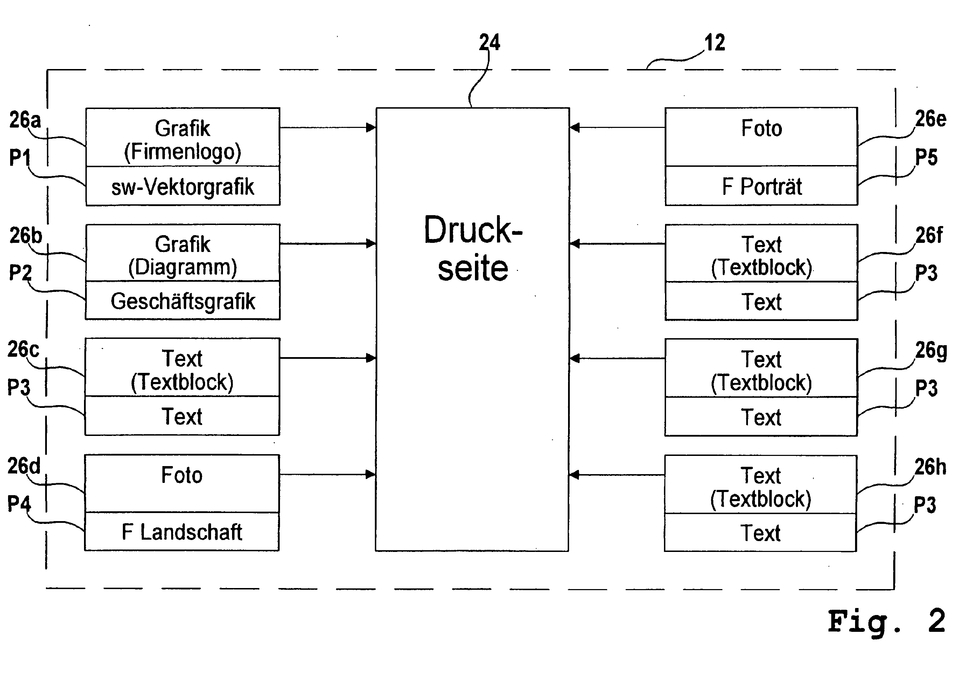

In Figur 2 ist schematisch dargestellt, wie eine Druckseite 24 mit Hilfe der ersten Datenverarbeitungsanlage 12 durch eine Bedienperson erstellt wird. Die Blöcke 26a bis 26h, die im Folgenden allgemein mit 26 bezeichnet werden, werden durch die Bedienperson in die Druckseite 24 eingefügt und an einer geeigneten Stelle positioniert. Die Druckseite 24 ist dabei ein zu verarbeitender Bereich und ein einzelner Block 26 ein Teil dieses zu verarbeitenden Bereichs 24.

Die Daten der Blöcke 26 werden aus Datenquellen (nicht dargestellt) geladen oder durch die Bedienperson mit Hilfe von den in dem Formulargeneratorprogrammmodul 28 enthaltenen Funktionen erzeugt. Die geladenen Blöcke 26 werden mit weiteren Funktionen des Formulargeneratorprogrammmoduls 28 insbesondere in Form und Größe entsprechend den Vorstellungen der Bedienperson angepasst und auf der Druckseite 24 an einer gewünschten Position angeordnet. Die einzelnen Blöcke 26 enthalten verschiedenartige Objekte. So enthält der Block 26a eine Schwarz/Weiß-Vektorgrafik, der Block 26b ein Diagramm mit einer Geschäftsgrafik, die Blöcke 26c, 26f, 26g, 26h enthalten Text, wobei der Block 26c Text in der Farbe Schwarz, der Block 26f Text in einer roten Farbe und der Block 26g Text in einer Graustufen-Darstellung sowie der Block 26h Text in der Farbe Schwarz enthält. Ein Block 26d und ein Block 26e enthalten jeweils ein Farbfoto, wobei das Foto des Blocks 26d ein Landschaftsbild und der Block 26e ein Portraitbild enthält. Die Objekteigenschaften der Blöcke 26 sind in Figur 2 mit P1 bis P5 bezeichnet.

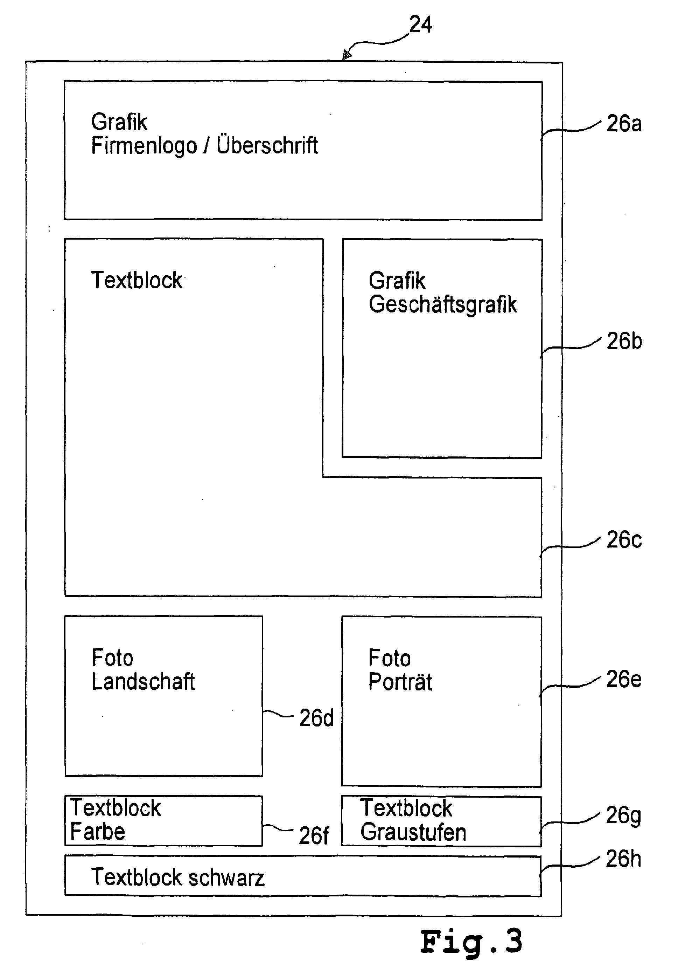

In Figur 3 ist die Anordnung der Blöcke 26a bis 26h auf der Druckseite 24 mit Hilfe von Rechtecken beispielhaft gezeigt. Die Form der Blöcke 26 ist jedoch nicht auf Rechtecke beschränkt, sondern sie können eine beliebige Form haben. Die Umrisse der Blöcke können auch kreisförmig oder beliebig geformte Vielecke sein.

Die Druckdaten der Druckseite 24, die mit Hilfe der ersten Datenverarbeitungsanlage 12 erzeugt wurden, werden beim System 10 nach Figur 1 zu der zweiten Datenverarbeitungsanlage 14 übertragen. In den Druckdaten sind jedoch keine individualisierenden Objekteigenschaften der einzelnen Blöcke 26a bis 26h enthalten, so dass bei einer Weiterverarbeitung der Druckdaten in der zweiten Datenverarbeitungsanlage 14 keine individuelle Auswahl und/oder Anpassung mindestens eines Bildverarbeitungsverfahrens für einzelne Objekte erfolgen kann. Vielmehr können die einzelnen Objekte der Blöcke 26a bis 26h im Druckdatenstrom nicht mehr als Objekte unterschieden werden. So enthalten die Druckdaten der Druckseite 24 vorzugsweise nur Pixeldaten einzelner Bildpunkte der Druckseite 24. Eine individuelle optimierte Weiterverarbeitung mit Hilfe der Datenverarbeitungsanlage 14 ist somit nicht ohne weiteres möglich. Auch der Drucker 16 kann dadurch einzelne Objekte der Druckseite 24 nicht unterscheiden.

Es ist auch vorgesehen, dass einzelne Teilbereiche der Druckseite 24 durch eine Bedienperson mit Hilfe der zweiten Datenverarbeitungsanlage 14 durch eine Auswahl festgelegt werden. Die Auswahl erfolgt vorzugsweise durch Ausgeben des Druckbildes der Druckseite auf einer Anzeigeeinheit der Datenverarbeitungsanlage 14 und Markieren des ausgewählten Bereichs mit Hilfe eines Zeigegerätes oder einer Tastatur. Den ausgewählten Teilbereichen weist die Bedienperson mindestens eine individualisierende Objekteigenschaft zu. Mit Hilfe dieser individualisierenden Objekteigenschaft werden die diesem Bereich zugeordneten Druckdaten mit einem geeigneten Bildverarbeitungsverfahren an die Ausgabeparameter des Druckers 16 angepasst und anschließend durch diesen ausgegeben. Die Anpassung an die Ausgabeparameter des Druckers 16 erfolgt mit Hilfe der zweiten Datenverarbeitungseinheit 14 oder alternativ mit einer Datenverarbeitungseinheit des Druckers 16. Die Anpassung der Druckdaten erfolgt dabei an die Ausgabeparameter des Druckers sowie an weitere Parameter, wie z.B. an die Druckersprache, die Art und die Härte der Fixierwalzen, die Art und die Eigenschaften des Trägermaterials, und an die Farbeinstellungen, d.h. an das Colormanagement, des Druckers 16.

Objekte, wie z.B. Logos in Vektorgrafik, Vektorgrafikentextelemente und ähnliche Objekte können dadurch ausgewählt und z.B. nicht gedithert werden, wohingegen andere Objekte, wie Fotos weiterhin gedithert werden können. Auch der Umwandlung von mehrfarbigen Elementen in zweifarbige oder dreifarbige Elemente kann gezielt mit Hilfe voreinstellbarer Parameter und/oder Bildverarbeitungsverfahren gesteuert und optimiert werden. Dadurch kann das Druckbild an die Ausgabeparameter des Druckers optimal angepasst werden. Dies ist insbesondere dann vorteilhaft, wenn der Drucker Druckbilder in der Farbe Schwarz und einer weiteren Farbe, z.B. der Farbe Rot, erzeugen kann. Dieses Erzeugen von zwei Druckbildern unterschiedlichen Farben wird auch als Highlight-Color-Drucken bezeichnet. Das Umwandeln von farbigen Objekten in andere Farben als den Druckfarben des Druckers in die Druckfarben des Druckers wird auch als Farbreparation bezeichnet. Die Umwandlung mit Hilfe eines solchen Farbreparationsverfahrens kann dabei abhängig von den dem Objekt zugewiesenen Objekteigenschaften erfolgen.

Ferner kann es beispielsweise vorgesehen sein, innerhalb bestimmter Bereiche einer Seite eine vorbestimmte Rasterung und/oder eine vorbestimmte Farbumsetzung vorzusehen. Das Überfüllen von Objekten wird bei Trapping-Verfahren eingesetzt. Die dabei verwendeten Algorithmen können abhängig den dem Objekt zugewiesenen Objekteigenschaften erfolgen. Durch die erfindungsgemäße Zuweisung der Bildeigenschaften für festzulegende Bereiche der Druckseite 24 erfolgt eine optimale Verarbeitung der Dokumentendaten, bzw. der Druckdaten, die durch die erste Datenverarbeitungseinheit 12 erzeugt werden. Dies ist erfindungsgemäß auch dann möglich, wenn den Objekten keine individualisierenden Objekteigenschaften zugeordnet sind oder diese bei der Übertragung von der ersten Datenverarbeitungseinheit 12 zur zweiten Datenverarbeitungseinheit 14 verloren gegangen sind bzw. auch dann, wenn die individualisierenden Objekteigenschaften nachträglich entfernt worden sind. Dieses Entfernen erfolgt insbesondere dann, wenn Druckdaten, insbesondere Rechnungsdaten von einem Unternehmen zu einem Druckzentrum übertragen werden und Manipulationen oder eine fehlerhafte Verarbeitung der Daten ausgeschlossen werden soll. Jedoch ist dann auch eine individuelle Zuordnung von Bildverarbeitungsverfahren zu einzelnen Objekten nicht mehr ohne weiteres möglich.

Die Bildverarbeitungsverfahren bewirken insbesondere eine Kantenglättung, das Weichzeichnen, das Scharfzeichnen, die Helligkeit, den Kontrast, die Negativdarstellung, die Spiegelung, die Auflösung, die Farbdarstellung, Grenzwerte zur Farbumwandlung, die Wasserzeichendarstellung der einzelnen Objekte der Druckseite 24. Durch die Erfindung ist eine positionsabhängige, auf mehrere verschiedene Bereiche einer Seite eingrenzbare und für verschiedene Druckseiten individuelle festlegbare Steuerung der Bildverarbeitung des jeweiligen Seitenbereichs möglich, insbesondere zur Reduzierung von Vollfarbdarstellungen, wobei verwendete Bildverarbeitungsverfahren und Algorithmen sowie deren Parametrierung ausgelegt und festgelegt wird. Die Wiedergabequalität der einzelnen Objekte in dem mit Hilfe des Druckers 16 erzeugten Druckbildes wird dadurch erheblich verbessert. Insbesondere beim Einsatz von zwei unterschiedlichen Tonerfarben, z.B. der Tonerfarbe Schwarz und der Tonerfarbe Rot, kann erst bei einer solchen objektweisen Verarbeitung sinnvoll eingesetzt werden. Jedoch steht oft nicht schon beim Erstellen der Druckseite 24 fest, welche Ausgabeparameter der Drucker 16 hat, auf dem die Druckseite 24 zu einem späteren Zeitpunkt ausgegeben werden soll. Dadurch wird vorzugsweise ein Vollfarbenbild eines Objekts in den Druckdatenstrom eingebunden und erst dann, nachdem die Ausgabeparameter, insbesondere die möglichen druckbaren Farben, festgelegt sind, wird dieses Vollfarbenbild umgewandelt und vorzugsweise mit Hilfe einer geeigneten Bildverarbeitungsprozedur optimal an die Ausgabeparameter des Druckers angepasst. Bei Objekten, die im Druckdatenstrom noch Objekteigenschaften, wie z.B. ein Datenformat, insbesondere ein Grafikdatenformat, kann alternativ oder zusätzlich der Typ des Grafikformats oder Informationen, die mit Hilfe des Grafikformats ermittelbar sind, für die Auswahl einer Verarbeitungsprozedur zum Anpassen des jeweiligen Objekts an die Ausgabeeigenschaften des Druckers genutzt werden. Diese Informationen können z.B. in Header-Daten enthalten sein, vorzugsweise in Header-Daten von JPEG-Grafikobjekten der TIFF-Grafikobjekten. Eine Optimierung der Anpassung der Objekte erfolgt somit erfindungsgemäß durch die Verarbeitung der Druckdaten mit Hilfe der zweiten Datenverarbeitungsanlage 14 und/oder durch Zuweisen von individualisierenden Objekteigenschaften zu einem Teil der Druckseite 24 erfolgen.

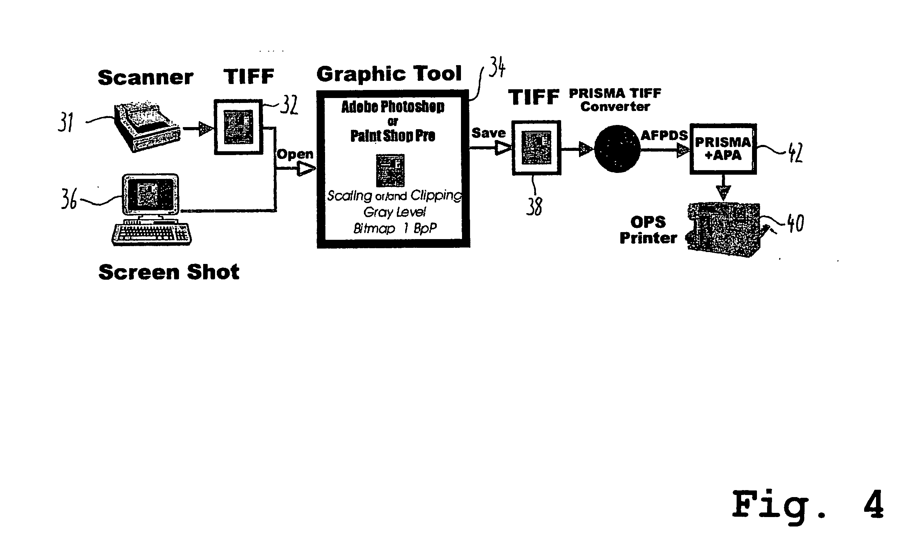

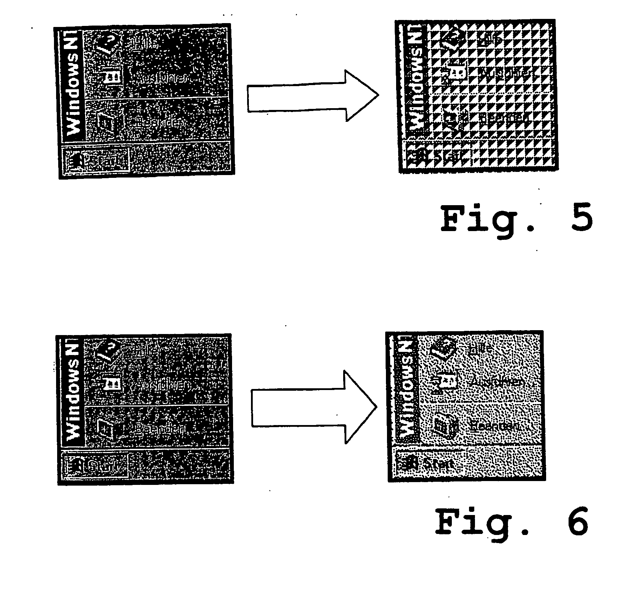

In Figur 4 ist ein Blockschaltbild dargestellt, das den Arbeitsablauf zum Erzeugen und Ausgeben einer Druckseite 24 gemäß der Erfindung zeigt. Mit Hilfe eine Scanners 31 werden Bilddaten 32 in einem TIFF-Datenformat erzeugt und einem Programmmodul 34 einer zweiten Datenverarbeitungsanlage zugeführt. Alternativ werden Bilddaten mit Hilfe eines Personalcomputers 36 z.B. durch Erfassen eines aktuellen Anzeigebildes einer Anzeigeeinheit des Personalcomputers 36 erzeugt und dem Programmmodul 34 zugeführt. Das Programmmodul 34 ist ein Bildverarbeitungsprogramm, z.B. das Programm Photoshop oder das Programm Paintshop Pro der Firma Adobe. Sowohl die Bilddaten 32 als auch die im Personalcomputer 36 übertragenen Bilddaten haben eine Farbauflösung von 32 Bit pro Pixel und eine Auflösung von 800 dpi. Mit Hilfe des Bildverarbeitungsprogramms 34 werden diese Bilddaten in eine Schwarzweiß-Darstellung mit einer Auflösung von 96 dpi umgewandelt, um die Bilddaten an die Ausgabeparameter eines Druckers 40 anzupassen. Die mit Hilfe des Bildverarbeitungsprogramms 34 erzeugten Bilddaten 38 werden einem Druckserver 42 als AFPDS-Druckdatenstrom zugeführt, der diese dann dem Drucker 40 zur Weiterverarbeitung zuführt. Wie nachfolgend in den Figuren 5 bis 11 dargestellt ist, kann die Umwandlung der Bilddaten 32 in Bilddaten 38 mit Hilfe verschiedener Bildverarbeitungsverfahren durch das Bildverarbeitungsprogramm 34 mit qualitativ unterschiedlichen Ergebnissen erfolgen.

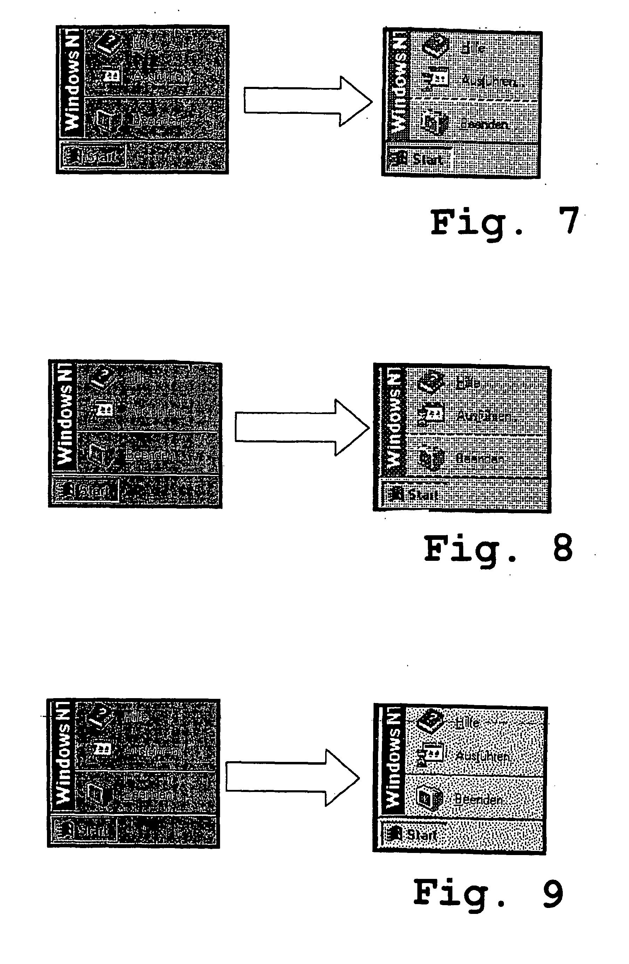

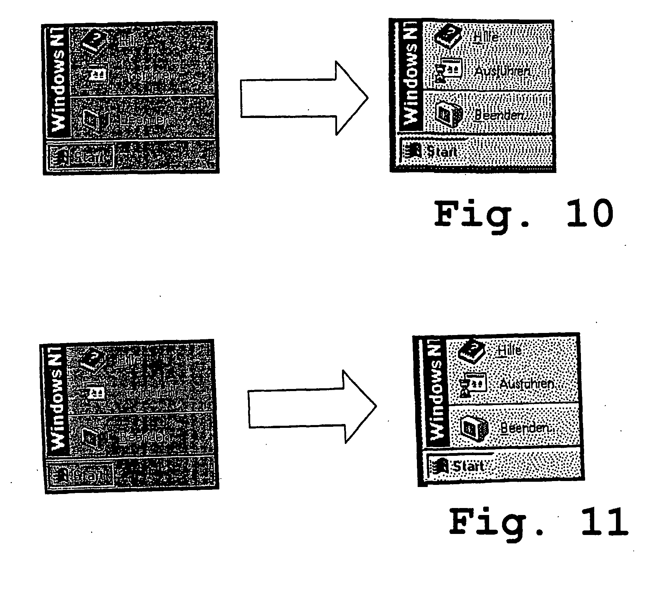

In den Figuren 5 bis 11 ist jeweils auf der linken Seite das Originalbild der Bildschirmdarstellung gezeigt und auf der rechten Seite das mit Hilfe des erzeugten angepassten Bildes, wobei die Umwandlung der Bilddaten mit Hilfe unterschiedlicher Umwandlungsverfahren bzw. mit verschiedenen Bildverarbeitungsverfahren erfolgt ist. In Figur 5 ist die Umwandlung mit Hilfe eines Muster-Dithering-Verfahrens, in Figur 6 mit Hilfe eines Diffusions-Dithering-Verfahrens, in Figur 7 mit Hilfe eines Halftone-Raster-Verfahrens, in Figur 8 mit Hilfe eines Regular-Raster-Verfahrens, in Figur 9 mit einem Fehlerdiffusions-Verfahren nach Floyd-Steinberg, in Figur 10 mit Hilfe eines Fehlerdiffusions-Verfahrens nach Brooks und in Figur 11 mit Hilfe eines Fehlerdiffusions-Verfahrens nach Stucki dargestellt. Diese Fehlerdiffusionsverfahren werden allgemein auch als Rasterverfahren bezeichnet. Mit Hilfe der den einzelnen Objekten zugewiesenen individualisierenden Objekteigenschaften kann je nach Objekteigenschaft ein geeignetes Umwandlungsverfahren, z.B. ein Umwandlungsverfahren nach den Figuren 5 bis 11 ausgewählt werden, um die Druckdaten des Bereichs, dem die jeweilige Objekteigenschaft zugewiesen ist, mit Hilfe des ausgewählten Bildverarbeitungsverfahrens umzuwandeln. Jedoch können auch weitere Bildverarbeitungsverfahren zusätzlich zu den in den Figuren 5 bis 11 erwähnten Bildverarbeitungsverfahren mit Hilfe der individualisierenden Objekteigenschaften alternativ oder zusätzlich ausgewählt und/oder deren Parameter mit Hilfe der individualisierenden Objekteigenschaften festgelegt werden. Die Objekteigenschaften betreffen vorzugsweise Ausgabe-, Druck - und/oder Verarbeitungsparameter. Mindestens eine Objekteigenschaft dient zur Auswahl eines Farbumsetzungs-, eines Rasterumsetzungs- oder eines Farbkorrekturverfahrens.

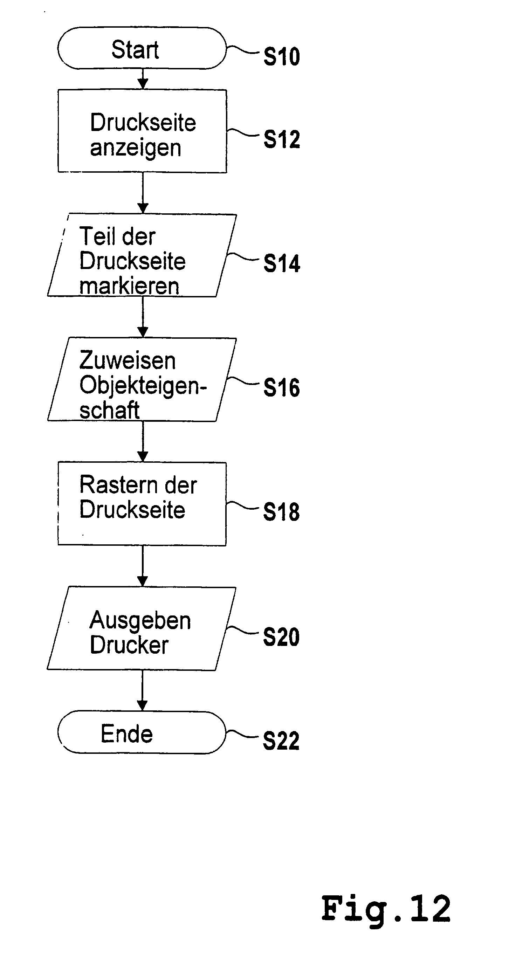

In Figur 12 ist ein Ablaufplan dargestellt, in dem der Ablauf zum Zuordnen von individualisierenden Objekteigenschaften dargestellt ist. Der Ablauf wird im Schritt S10 gestartet. Anschließend wird im Schritt S12 die Druckseite auf einer Anzeigeeinheit der zweiten Datenverarbeitungseinheit angezeigt. Eine Bedienperson markiert anschließend im Schritt S14 einen Teil der Druckseite 24 und weist diesen markierten Teil der Druckseite 24 im Schritt S16 eine Objekteigenschaft zu, z.B. durch Zuweisen eines Objektparameters P1 bis P5 (vgl. Fig. 2). Nachfolgend werden die Druckdaten der Druckseite 24 im Schritt S18 mit Hilfe eines Rasterprozessors des Druckers 16 verarbeitet, wobei die dem markierten Teil zugeordneten Druckdaten abhängig von der im Schritt S16 zugewiesenen Objekteigenschaft P1 bis P5 gerastert und verarbeitet werden. Mit Hilfe der beim Rastern im Schritt S18 erzeugten Rasterbilddaten wird anschließend im Schritt S20 ein Druckbild auf einem Trägermaterial vom Drucker 16 erzeugt und ausgegeben. Der Ablauf ist anschließend im Schritt S22 beendet.

Alternativ erfolgt die Zuweisung eines Objektparameters P1 bis P5 mit Hilfe eines Grafikformats und/oder Bildformats von in einem Datenstrom enthaltenen Grafik- bzw. Bilddaten. Solche Grafikformate sind insbesondere Bitmap-Grafikformate, wie z.B. GIF, TIFF, RLE, PNG, JPEG, IFF, TGA und BMP, und Vektor-Grafikformate, wie z.B. WMF, DXF und EPS. Weitere gebräuchliche Grafikformate sind das PICT-, STARTUP-, MACPAINT-, 8BPS-, JFIF-, PCX-, SCR-, IMG-, RIFF-, 8BIM-, PICS-, PIC-, FLI-, TGA-, MSP-, SHP-, WPG-, PBM-, PGM-, PPM-, CGM-, SUN-, XBM-, PM-, PAC-, DEGAS, TINY, NEOCHROME, SPC-, GEM-META-, IMAGIC, HP-GL-, EPSF-, EPSI, XWD, und das SUN-RASTER-Format. Jedes dieser Grafikformate kann selbst als Objekteigenschaft und/oder als Parameter zur Auswahl einer geeigneten Bildverarbeitungsprozedur zum Umwandeln der dem jeweiligen Grafikformat zugeordneten Bilddaten genutzt werden.

Obgleich in den Zeichnungen und in der folgenden Beschreibung bevorzugte Ausführungsbeispiele aufgezeigt und detailliert beschrieben worden sind, sollten sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 10: System
- 12, 14: Datenverarbeitungseinheit
- 16, 40: Drucker
- 28: Formulareditor
- 30: Bildverarbeitungsroutinen
- 24: Druckseite
- 26: Objekt
- P1 bis P5: Objekteigenschaft
- 31: Scanner
- 32, 38: Bilddaten
- 34: Programmmodul
- 36: Personalcomputer
- 42: Druckserver
- S10 bis S22: Verfahrensschritte

## Patentansprüche

1. Verfahren zum Verarbeiten von Druckdaten mehrerer Druckseiten,
bei dem ein Druckdatenstrom mit Druckdaten mehrerer Druckseiten (24) erzeugt wird, wobei zumindest einem Bereich (24) dieser Druckseiten erste Objekteigenschaften (P1 bis P5) zugeordnet sind,
und bei dem die Druckdaten verarbeitet werden, **dadurch gekennzeichnet, dass** mindestens ein Teil (26) des Bereichs (24) einer Druckseite (24) des Druckdatenstroms ausgewählt wird,
diesem ausgewählten Teil (26) des Bereichs (24) auf jeder Druckseite (24) des Druckdatenstroms mindestens eine von den ersten Objekteigenschaften verschiedene zweite Objekteigenschaft (P1 bis P5) zugeordnet wird,
und dass die Druckdaten jeder Druckseite (24), die den ausgewählten Teil (26) des Bereichs (24) betreffen, abhängig von der zweiten Objekteigenschaft (P1 bis P5) weiterverarbeitet werden.

2. Verfahren nach Anspruch 1, **dadurch gekennzeichnet, dass** ein zweiter Druckdatenstrom erzeugt wird, bei dem dem Teil (26) des Bereichs (24) jeder Druckseite (24) die zweite Objekteigenschaft (P1 bis P5) zugeordnet ist.

3. Verfahren nach Anspruch 2, **dadurch gekennzeichnet, dass** der zweite Druckdatenstrom einem Drucker (16, 40) zugeführt wird, der den ausgewählten Teil des Bereichs jeder Druckseite (24) abhängig von der zweiten Objekteigenschaft (P1 bis P5) oder abhängig von der zweiten Objekteigenschaft (P1 bis P5) und zumindest einem Teil der ersten Objekteigenschaft verarbeitet, und der den übrigen Bereich abhängig von zumindest einem Teil der ersten Objekteigenschaft verarbeitet.

4. Verfahren nach einem der vorhergehenden Ansprüche,
**dadurch gekennzeichnet, dass** der Bereich (24) eine gesamte Druckseite umfasst.

5. Verfahren nach einem der vorhergehenden Ansprüche,
**dadurch gekennzeichnet, dass** die erste und/oder zweite Objekteigenschaft mindestens einen Ausgabe-, Druck - und/oder Verarbeitungsparameter betrifft.

6. Verfahren nach einem der vorhergehenden Ansprüche,
**dadurch gekennzeichnet, dass** zumindest eine Objekteigenschaft zur Auswahl eines Farbumsetzungsverfahrens, eines Rasterumsetzungsverfahrens oder eines Fehlerkorrekturverfahrens dient.

7. Verfahren nach Anspruch 6, **dadurch gekennzeichnet, dass** das Rasterverfahren ein Floyd-Steinberg-, ein Burkes - oder ein Stucki-Rasterverfahren ist.

8. Verfahren nach einem der vorhergehenden Ansprüche,
**dadurch gekennzeichnet, dass** bei der Auswahl des Teils (26) des Bereichs (24) ein Flächenbereich des Bereichs ausgewählt wird.

9. Verfahren nach Anspruch 8, **dadurch gekennzeichnet, dass** der Flächenbereich mit Hilfe einfacher geometrischer Figuren ausgewählt wird, insbesondere mit Hilfe von Rechtecken, Kreisen oder Vielecken.

10. Verfahren nach einem der vorhergehenden Ansprüche,
**dadurch gekennzeichnet, dass** bei der Druckvorbereitung eine Anpassung der Auflösung der im Druckdatenstrom enthaltenen Druckdaten an die Auflösung des Druckers (16, 40) und/oder eine Anpassung der im Druckdatenstrom enthaltenen Farb- und/oder Graustufenwerte an die Geräteeigenschaften des Druckers (16, 40) erfolgt.

11. System zum Verarbeiten von Druckdaten mehrerer Druckseiten,
mit einer ersten Datenverarbeitungseinheit (12), die einen Druckdatenstrom mit Druckdaten mehrerer Druckseiten (24) erzeugt, wobei zumindest einem Bereich (24) dieser Druckseiten mindestens eine erste Objekteigenschaft zugeordnet ist,
und mit einer zweite Datenverarbeitungseinheit (14), die die Druckdaten verarbeitet, **dadurch gekennzeichnet, dass** beim Verarbeiten der Druckdaten durch die zweite Datenverarbeitungseinheit (14) mindestens ein Teil (26) des Bereichs (24) einer Druckseite (24) des Druckdatenstroms auswählbar ist,
diesem ausgewählten Teil (26) des Bereichs (24) auf jeder Druckseite (24) des Druckdatenstroms mindestens eine von der ersten Objekteigenschaft verschiedene zweite Objekteigenschaft (P1 bis P5) zuordenbar ist,
und dass die zweite Datenverarbeitungseinheit (14) oder ein Drucker (16, 40) die Druckdaten jeder Druckseite (24), die den ausgewählten Teil (26) des Bereichs (24) betreffen, abhängig von der zweiten Objekteigenschaft (P1 bis P5) weiter verarbeitet.

12. System nach Anspruch 11, **dadurch gekennzeichnet, dass** die zweite Datenverarbeitungseinheit (14) im Drucker (16, 40) angeordnet ist.

## Claims

1. Method for processing of print data of several print pages,
in which a print data stream with print data of several print pages (24) is generated, wherein first object properties (P1 to P5) are associated with at least one region (24) of these print pages;
and wherein the print data are processed, **characterized in that** at least one part (26) of the region (24) of a print page (24) of the print data stream is selected;
at least one second object property (P1 to P5) differing from the first object properties is associated with this selected part (26) of the region (24) on each print page (24) of the print data stream;
and in which the print data of each print page (24) which pertain to the selected part (26) of the region (24) are processed further dependent on the second object property (P1 to P5).

2. Method according to claim 1, **characterized in that** a second print data stream is generated in which the second object property (P1 to P5) is associated with the part (26) of the region (24) of each print page (24).

3. Method according to claim 2, **characterized in that** the second print data stream is supplied to a printer (16, 40) which processes the selected part of the region of each print page (24) dependent on the second object property (P1 to P5) or dependent on the second object property (P1 to P5) and at least one part of the first object property, and which processes the remaining region dependent on at least one part of the first object property.

4. Method according to any of the preceding claims, **characterized in that** the region (24) comprises an entire print page.

5. Method according to any of the preceding claims, **characterized in that** the first/and or second object property pertains to at least one output, print and/or processing parameter.

6. Method according to any of the preceding claims, **characterized in that** at least one object property serves for selection of a colour conversion method, a raster conversion method or an error correction method.

7. Method according to claim 6, **characterized in that** the raster method is a Floyd-Steinberg raster method, a Burkes raster method or a Stucki raster method.

8. Method according to any of the preceding claims, **characterized in that** when selecting the part (26) of the region (24) an areal region of the region is selected.

9. Method according to claim 8, **characterized in that** the areal region is selected with the aid of simple geometric figures, in particular with the aid of rectangles, circles or polygons.

10. Method according to any of the preceding claims, **characterized in that** an adaptation of the resolution of the print data contained in the print data stream to the resolution of the printer (16, 40) and/or an adaptation of the colour and/or grey level values contained in the print data stream to the device properties of the printer (16, 40) occurs in the print preparation.

11. System for processing of print data of several print pages,
comprising a first data processing unit (12) that generates a print data stream with print data of several print pages (24), whereby at least one first object property is associated with at least one region (24) of these print pages;
and comprising a second data processing unit (14) that processes the print data, **characterized in that** when processing the print data with the aid of the second data processing unit (14) at least one part (26) of the region (24) of a print page (24) of the print data stream can be selected;
at least one second object property (P1 to P5) differing from the first object property can be associated with this selected part (26) of the region (24) on each print page (24) of the print data stream;
and that the second data processing unit (14) or a printer (16, 40) processes further the print data of each print page (24) that relate to the selected part (26) of the region (24) dependent on the second object property (P1 to P5).

12. System according to claim 11, **characterized in that** the second data processing unit (14) is arranged in the printer (16, 40).

## Revendications

1. Procédé de traitement de données d'impression de plusieurs pages d'impression,
dans lequel un flux de données d'impression est générée avec des données d'impression de plusieurs pages d'impression (24), des premières propriétés objet (P1 à P5) étant associées à au moins une zone (24) de cette page d'impression,
et dans lequel les données d'impression sont traitées, **caractérisé en ce qu'**au moins une partie (26) de la zone (24) d'une page d'impression (24) du flux de données d'impression est sélectionnée,
au moins une deuxième propriété objet (P1 à P5) différente de la première propriété objet est associée à cette partie sélectionnée (26) de la zone (24) sur chaque page d'impression (24) du flux de données d'impression,
et **en ce que** les données d'impression de chaque page d'impression (24), qui concernent la partie sélectionnée (26) de la zone (24), sont traitées en plus en fonction de la deuxième propriété objet (P1 à 5).

2. Procédé selon la revendication 1, **caractérisé en ce qu'**un deuxième flux de données d'impression est généré dans lequel la deuxième propriété objet (P1 à P5) est associée à la partie (26) de la zone (24) de chaque page d'impression (24).

3. Procédé selon la revendication 2, **caractérisé en ce que** le deuxième flux de données d'impression est amené à un appareil d'impression (16, 40) qui traite la partie sélectionnée de la zone de chaque page d'impression (24) en fonction de la deuxième propriété objet (P1 à P5) ou en fonction de la deuxième propriété objet (P1 à P5) et d'au moins une partie de la première propriété objet, et traite la zone restante en fonction d'au moins une partie de la première propriété objet.

4. Procédé selon l'une des revendications précédentes, **caractérisé en ce que** la zone (24) comporte une page d'impression complète.

5. Procédé selon l'une des revendications précédentes, **caractérisé en ce que** la première et/ou la deuxième propriété objet concerne au moins un paramètre d'édition, d'impression et/ou de traitement.

6. Procédé selon l'une des revendications précédentes, **caractérisé en ce qu'**au moins une propriété objet sert à sélectionner un procédé de conversion de couleur, un procédé de conversion de trame ou un procédé de correction d'erreurs.

7. Procédé selon la revendication 6, **caractérisé en ce que** le procédé de tramage est un procédé de tramage Floyd-Steinberg, Burkes ou Stucki.

8. Procédé selon l'une des revendications précédentes, **caractérisé en ce que** une zone de surface de la zone est sélectionnée lors de la sélection de la partie (26) de la zone (24).

9. Procédé selon la revendication 8, **caractérisé en ce que** la zone de surface est sélectionnée à l'aide de figures géométriques simples, notamment à l'aide de rectangles, de cercles ou de polygones.

10. Procédé selon l'une des revendications précédentes, **caractérisé en ce que**, lors de la préparation de l'impression, l'on effectue une adaptation de la résolution des données d'impression, contenues dans le flux de données d'impression, à la résolution de l'appareil d'impression (16, 40) et/ou l'on effectue une adaptation des valeurs de couleur et/ou de gris, contenues dans le flux de données d'impression, aux propriétés de l'appareil d'impression (16, 40).

11. Système de traitement de données d'impression de plusieurs pages d'impression, comportant
une première unité de traitement de données (12) qui génère un flux de données d'impression comportant des données d'impression de plusieurs pages d'impression (24), au moins une première propriété objet étant associée à au moins une zone (24) de ces pages d'impression,
et une deuxième unité de traitement de données (14) qui traite les données d'impression, **caractérisé en ce que**, lors du traitement des données d'impression par la deuxième unité de traitement de données (14), au moins une partie (26) de la zone (24) d'une page d'impression (24) du flux de données d'impression peut être sélectionnée,
au moins une deuxième propriété objet (P1 à P5) différente de la première propriété objet peut être associée à cette partie sélectionnée (26) de la zone (24) sur chaque page d'impression (24) du flux de données d'impression,
et **en ce que** la deuxième unité de traitement de données (14) ou un appareil d'impression (16, 40) traite en plus les données d'impression de chaque page d'impression (24), qui concerne la partie sélectionnée (26) de la zone (24), en fonction de la deuxième propriété objet (P1 à P5).

12. Système selon la revendication. 11, **caractérisé en ce que** la deuxième unité de traitement de données (14) est disposée dans l'appareil d'impression (16, 40).
